# EUROPEAN PATENT APPLICATION

(11) **EP 4 645 559 A1**
(43) Date of publication of application: **05.11.2025**
(21) Application number: 23911447.3
(22) Date of filing: 20.11.2023
(51) Int. Cl.: H01M 50/291, H01M 50/213

(54) **BATTERY PACK**

(30) Priority: 26.12.2022 JP 2022208969
(71) Applicant: Panasonic Energy Co., Ltd., Osaka 570-8511 (JP)
(72) Inventor: MATSUBARA, Shota, Osaka 571-0057 (JP); KATAOKA, Yuma, Osaka 571-0057 (JP); OSHIMA, Yasufumi, Osaka 571-0057 (JP); YOSHIKAWA, Kenta, Osaka 571-0057 (JP)
(74) Representative: Eisenführ Speiser
(86) International application number: PCT/JP2023/041687
(87) International publication number: WO 2024/142665

(57) **Abstract**

The present disclosure provides a battery pack capable of holding secondary battery cells without gaps. A battery pack 100 includes a battery holder 2 that holds one or more secondary battery cells 1. The battery holder 2 includes hollow holder tube units 3, each of which individually stores the one or more secondary battery cell 1, and a pair of holder lid units 12 and 22 that respectively close hollow end faces of the holder tube units 3. At least one of the pair of holder lid units 12 and 22 includes an elastically deformable protruding portion 15 that partially protrudes toward one of the pair of end faces of the secondary battery cells 1 stored in the holder tube unit 3. The battery holder 2 is configured by joining a first holder 10 and a second holder 20 that are divided into at least two portions in a longitudinal direction of the one or more secondary battery cells 1, and the protruding portion 15 is configured to press the end face of the one or more secondary battery cells 1 in a state where the first holder 10 and the second holder 20 are coupled.

## Description

### TECHNICAL FIELD

The present disclosure relates to a battery pack.

### BACKGROUND ART

A battery pack containing a plurality of secondary battery cells stored in an outer case has been used to drive an electrical device by a rechargeable secondary battery cell, such as a lithium-ion secondary battery (e.g., Patent Literature 1). In such a battery pack, the secondary battery cells are held by a battery holder. Such a battery holder needs to be made slightly larger so as to accommodate the secondary battery cells, in consideration of the production tolerances of the battery holder itself and of the secondary battery cells.

However, in this configuration, a gap is likely to occur when the secondary battery cells are stored in the battery holder, and therefore a structure for suppressing rattling has been required. For example, there has been a structure in which silicone rubber is interposed at the positive electrode part of the secondary battery cell and fastened by screwing. In this method, however, an additional member is required to suppress the gap, and there has also been a problem in that the number of processes increases due to positioning of the silicone rubber, screwing, and the like.

### CITATION LIST

### PATENT LITERATURE

Patent Literature 1: Japanese Unexamined Patent Application Publication No. 2019-83087
Patent Literature 2: Japanese Unexamined Patent Application Publication (Translation of PCT Application) No. 2021-501455

### SUMMARY OF INVENTION

### TECHNICAL PROBLEM

One of the objects of the present disclosure is to provide a battery pack capable of holding secondary battery cells without gaps.

### SOLUTION TO PROBLEM

A battery pack according to one embodiment of the present invention is a battery pack including one or more secondary battery cells, each of which extends in one direction and has a pair of end faces intersecting the extending direction, and a battery holder that holds the one or more secondary battery cells. The battery holder includes a hollow holder tube unit that individually stores each of the one or more secondary battery cells; and a pair of holder lid units that respectively close hollow end faces of the holder tube unit. At least one of the pair of holder lid units includes an elastically deformable protruding portion that partially protrudes toward one of the pair of end faces of the secondary battery cells stored in the holder tube unit, the battery holder is configured by joining a first holder and a second holder that are divided into at least two portions in a longitudinal direction of the one or more secondary battery cells, and the protruding portion is configured to press the end face of the one or more secondary battery cells in a state where the first holder and the second holder are coupled.

### ADVANTAGEOUS EFFECTS OF INVENTION

A battery pack according to one embodiment of the present invention allows the secondary battery cell to be held by being caught between a first holder and a second holder along the longitudinal direction of the secondary battery cell, while allowing the end face of the secondary battery cell to be brought into contact with and held by a protruding portion from the longitudinal direction.

### BRIEF DESCRIPTION OF DRAWINGS

FIG. 1 is a perspective view of a battery holder of a battery pack according to Embodiment 1;
FIG. 2 is a perspective view of the battery holder of FIG. 1, viewed from the back;
FIG. 3 is an exploded perspective view of a battery pack including secondary battery cells and lead plates added to the battery holder of FIG. 1;
FIG. 4 is an exploded perspective view of a battery pack including secondary battery cells and lead plates added to the battery holder of FIG. 2;
FIG. 5 is a cross-sectional view with an enlarged view of a main portion of the battery holder of FIG. 1 taken along the line V-V;
FIG. 6 is a cross-sectional perspective view of the battery holder of FIG. 1 taken along the line VI-VI;
FIG. 7 is a cross-sectional view of a battery holder according to a comparative example;
FIG. 8 is a cross-sectional view showing a state in which secondary battery cells are being inserted into the battery holder in FIG. 3;
FIG. 9 is a cross-sectional view showing a state in which the secondary battery cells are inserted into the battery holder in FIG. 8;
FIG. 10 is a cross-sectional view taken along the line X-X in FIG. 1;
FIG. 11 is a perspective view of FIG. 10;
FIG. 12 is an enlarged perspective view of the battery holder of FIG. 1;
FIG. 13 is a rear view showing an inner face of a battery holder according to Embodiment 2;
FIG. 14 is a rear view showing an inner face of a battery holder according to Embodiment 3;
FIG. 15 is a rear view showing an inner face of a battery holder according to Embodiment 4;
FIG. 16 is a rear view showing an inner face of a battery holder according to Embodiment 5;
FIG. 17 is a rear view showing an inner face of a battery holder according to Embodiment 6;
FIG. 18 is a rear view showing an inner face of a battery holder according to Embodiment 7;
FIG. 19 is a rear view showing an inner face of a battery holder according to Embodiment 8;
FIG. 20 is a perspective view of a battery pack according to Embodiment 9;
FIG. 21 is a perspective view of a battery pack according to Embodiment 10;
FIG. 22 is an exploded perspective view of the battery pack of FIG. 21;
FIG. 23 is a front view of a second holder of FIG. 22; and
FIG. 24 is a front view of a first holder of FIG. 22, viewed from the back.

### DESCRIPTION OF EMBODIMENTS

The embodiments of the present invention may be specified by the following configurations and features.

A battery pack according to another embodiment of the present invention is as recited in foregoing embodiment, wherein the battery holder has a length along the longitudinal direction of each of the secondary battery cells in a cell storage space formed of the holder tube unit that individually stores the one or more secondary battery cells and the pair of holder lid units, an interval between the pair of holder lid units is longer than the length of each of the one or more secondary battery cells, and a length defined by a tip end of the protruding portion is shorter than the length of each of the one or more secondary battery cells. With this configuration, the interval between the pair of holder lid units in the cell storage space for storing the secondary battery cells is made longer than the secondary battery cell in consideration of, for example, production tolerances. Also, the provision of the elastically deformable protruding portion allows the secondary battery cell to be stably held by being pressed, thereby preventing rattling in the gap.

Further, a battery pack according to another embodiment of the present invention is as recited in any of foregoing embodiments, wherein the protruding portion is integrally formed with one of the pair of holder lid units. With this configuration, the protruding portion is formed on only one of the holder lid units, thereby allowing the secondary battery cell to be stably held in the cell storage space.

Further, a battery pack according to another embodiment of the present invention is as recited in any of foregoing embodiments, wherein a pair of slits is formed in one of the pair of holder lid units, and the protruding portion is formed between the pair of slits. With this configuration, by forming the protruding portion between the slits, the protruding portion can sink in the slit portions, thereby imparting elasticity in the protruding direction of the protruding portion with a simple structure.

Further, a battery pack according to another embodiment of the present invention is as recited in any of foregoing embodiments, wherein the protruding portion is formed at a center of a longitudinal direction of the pair of slits. With this configuration, the amount of elastic deformation of the protruding portion utilizing the slits can be increased.

Furthermore, a battery pack according to another embodiment of the present invention is as recited in any of foregoing embodiments, wherein a plate spring unit that is sandwiched between the pair of slits has a thickness thinner than a thickness of the holder lid units. With this configuration, further elasticity can be imparted to the plate spring unit provided with the protruding portion.

Furthermore, a battery pack according to another embodiment of the present invention is as recited in any of foregoing embodiments, wherein each of the one or more secondary battery cells is formed into a cylindrical shape.

Furthermore, a battery pack according to another embodiment of the present invention is as recited in any of foregoing embodiments, wherein a plurality of the protruding portions are disposed in one of the pair of holder lid units.

Furthermore, a battery pack according to another embodiment of the present invention is as recited in any of foregoing embodiments, wherein the plurality of the protruding portions are disposed in rotational symmetry in a circular shape of an end face of the cylindrical secondary battery cell.

Moreover, a battery pack according to another embodiment of the present invention is as recited in any of foregoing embodiments, wherein the pair of slits is formed into an arc shape along a circumferential direction of the end face of the cylindrical secondary battery cell.

Moreover, a battery pack according to another embodiment of the present invention is as recited in any of foregoing embodiments, wherein the protruding portion is configured to press each end face on a negative electrode side of the one or more secondary battery cells.

Embodiments of the present invention are described below with reference to the drawings. However, the embodiments shown below are only examples to illustrate the technical concepts of the present invention, and the present invention is not limited to these embodiments. Further, this specification does not limit any member in the claims to the members described in these embodiments. In particular, unless otherwise specified, the dimensions, materials, shapes, relative positions, etc. of the components described in these embodiments are intended to be illustrative and not to limit the scope of the present invention. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present invention may be implemented such that a plurality of elements are formed from the same member, allowing a single member to serve as a plurality of elements, or that, conversely, the function of a single member is shared among a plurality of members.

The battery pack of the present invention can be used, for example, as a power source for driving an assist bicycle, a power source for an electric scooter for home delivery and the like, an electric cart for use in locations such as golf courses, factories, and airports, and a self-propelled robot for home delivery, as well as a power source for driving construction machinery or vehicles such as hybrid vehicles and electric vehicles. In addition, the battery pack of the present invention can be used as a power source for portable electrical devices, such as radios, electric cleaners, and power tools. Alternatively, for stationary energy storage applications, the battery pack of the present invention can also be used as a backup power source for servers, as well as a power supply for households, business establishments, and factories. A battery pack used as a power source for driving an assist bicycle is described below as one embodiment of the present invention.

### [EMBODIMENT 1]

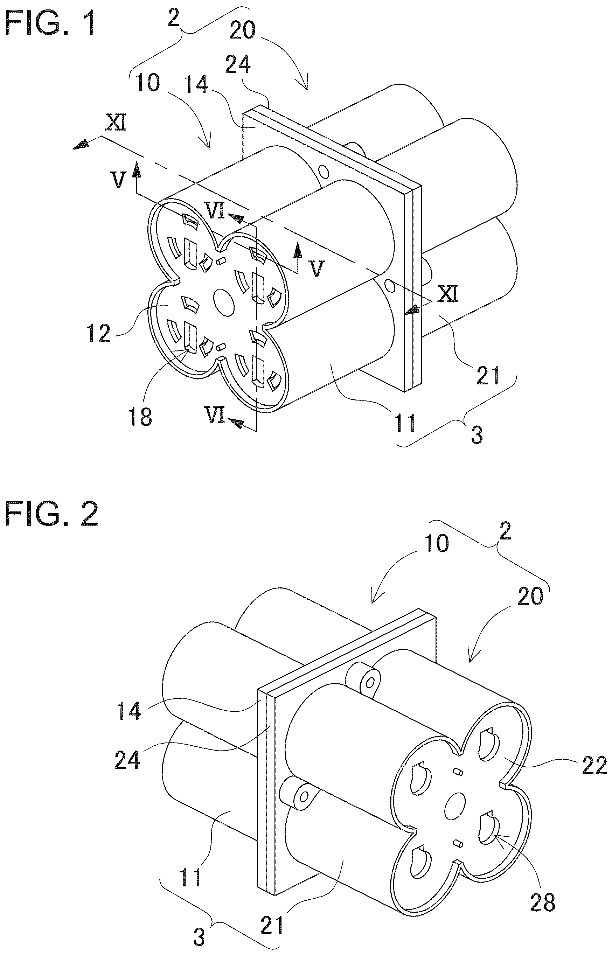

FIGs. 1 to 9 illustrate a battery pack 100 according to Embodiment 1 of the present invention. The battery pack 100 shown in these figures includes one or more secondary battery cells 1 and a battery holder 2 that holds the one or more secondary battery cells 1. As shown in FIGs. 1 and 2, the battery holder 2 has a shape in which tubular bodies elongated along the outer shape of the secondary battery cell 1 are stacked. An outer case or the like that covers the outer periphery of the battery holder 2 may also be added.

### (Secondary Battery Cell 1)

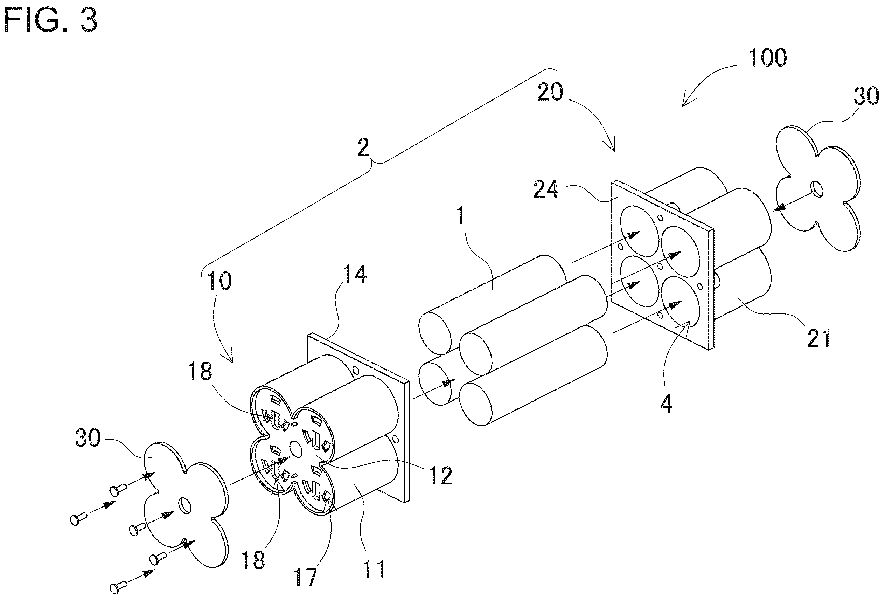

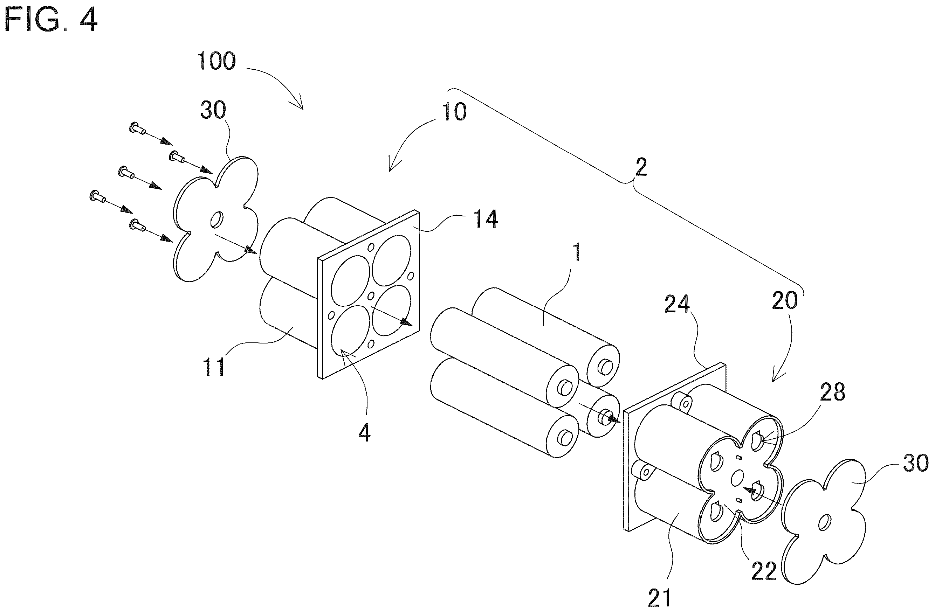

Each secondary battery cell 1 extends in one direction and has a pair of end faces intersecting the extending direction. Such a secondary battery cell 1 may be a secondary battery cell having a square or cylindrical outer can. In the examples shown in FIGs. 3 and 4, four cylindrical secondary battery cells 1 are disposed in a state where two cells are stacked on the other two, forming a two-tier structure. In this example, the positive electrodes and the negative electrodes of all the secondary battery cells 1 are aligned in the same direction. These secondary battery cells 1 are connected in series or in parallel by lead plates 30. In the examples of FIGs. 3 and 4, the secondary battery cells 1 are connected in a 4-parallel configuration. However, the secondary battery cells 1 may also be connected in a 2-series 2-parallel configuration by dividing the lead plates 30. The number of the secondary battery cells, their arrangement, the number of series and parallel connections, and the like are not limited to this example, and any number and arrangement can be used as appropriate.

Each secondary battery cell 1 has positive and negative electrodes. The positive or negative electrode is preferably disposed on one of the end faces of the secondary battery cell 1. Suitable examples of batteries to be used for the secondary battery cell 1 include known secondary batteries, such as lithium-ion secondary batteries, nickel-metal hydride batteries, or nickel-cadmium batteries.

### (Lead Plate 30)

The lead plate 30 is disposed on the side face of the battery holder 2. The lead plate 30 connects the electrodes on the end faces of the secondary battery cells 1 to each other, thereby connecting the plurality of secondary battery cells 1 in series or in parallel. Each of these lead plates 30 is formed of a metal plate with excellent electrical conductivity, such as a nickel plate. An insulating plate may be placed on each end face of the lead plate 30, if necessary. The insulating plate is formed of a material with excellent insulating property, such as paper or mica. Further, if necessary, a circuit board including a protection circuit or a charging/discharging circuit for the secondary battery cells may be added to the battery pack.

### (Battery Holder 2)

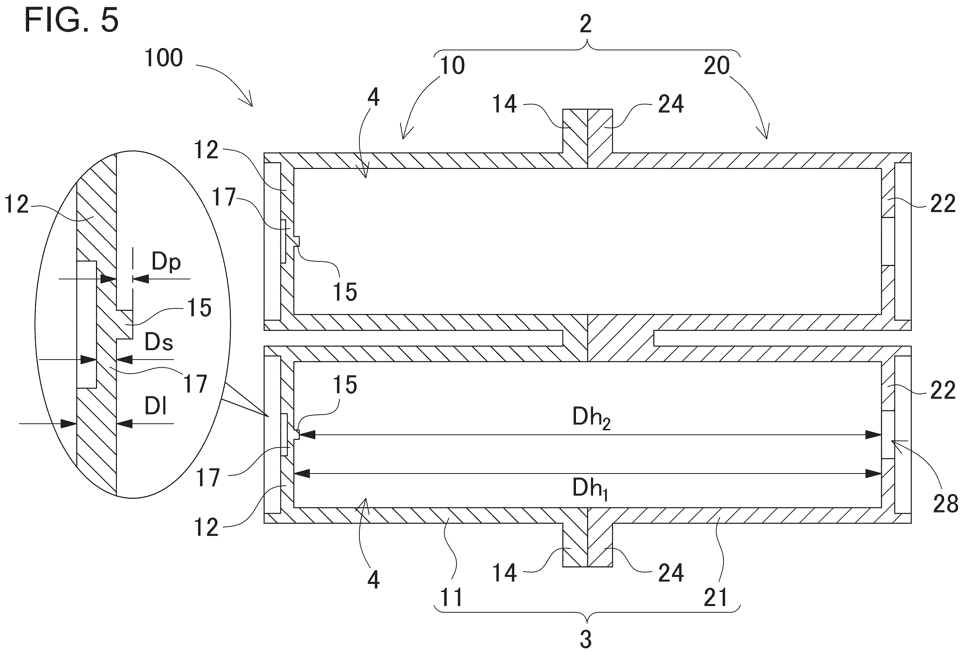

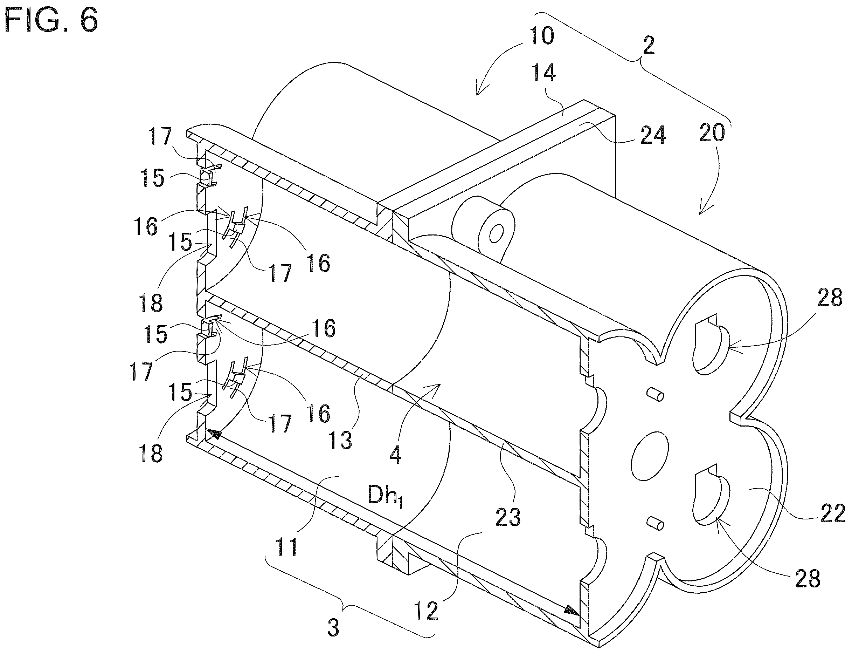

The battery holder 2 holds the one or more secondary battery cells 1. As shown in the cross-sectional views of FIGs. 5 and 6, the battery holder 2 includes hollow holder tube units 3, each of which individually stores each secondary battery cell 1, and a pair of holder lid units 12 and 22 that respectively close the hollow end faces of the holder tube units 3. A cell storage space 4 for storing the secondary battery cell 1 is formed by the holder tube unit 3 and the holder lid units 12 and 22. As shown in FIG. 6, etc., each cell storage space 4 is individually partitioned. In the examples shown in FIGs. 1 to 4, etc., four holder tube units 3 are stacked in a 2-row × 2-column matrix to form a cell storage space 4 for storing four secondary battery cells 1. As shown in FIGs. 5 and 6, each cell storage space 4 is individually partitioned by partition walls 13 and 23 inside the holder tube unit 3 so that adjacent secondary battery cells 1 do not come into contact with each other. On the other hand, the outer faces of adjacent holder tube units 3 are integrally formed. Such a battery holder 2 can be formed of a material having excellent insulating properties, for example, a thermoplastic resin, such as m-PPE (modified polyphenylene ether), ABS resin, PC (polycarbonate), PP (polypropylene), or PBT (polybutylene terephthalate), or a thermosetting resin, such as silicone resin, unsaturated phenolic resin, or unsaturated polyester.

The holder lid units 12 and 22 include windows 18 and 28, respectively, that are opened for connecting the electrodes on the end face of the secondary battery cell 1 to the lead plate 30. The portions of the lead plate 30 corresponding to the windows 18 and 28 of the holder lid units 12 and 22 are bent so that these portions are partially protruded, allowing the lead plate 30 to be electrically connected to the end face of the secondary battery cell 1 through the windows 18 and 28.

### (First Holder 10; Second Holder 20)

Further, the battery holder 2 includes a first holder 10 and a second holder 20 that are divided into two portions in the longitudinal direction of the secondary battery cell 1. The secondary battery cell 1 is held by being caught between the first holder 10 and the second holder 20. Such a structure makes it possible to hold the secondary battery cell 1 by bringing a protruding portion 15, which will be described later, into contact with the end face of the secondary battery cell 1 from the longitudinal direction.

The first holder 10 and the second holder 20 are configured such that the first holder 10 and the second holder 20 respectively include divided holder tubes 11 and 21 having a length of approximately one-half of the secondary battery cell 1, and holder lid units 12 and 22 that close one end face of the divided holder tubes 11 and 21, thereby dividing the holder tube unit 3 at the center of the longitudinal direction of the secondary battery cell 1. The other end face of the divided holder tubes 11 and 21 serves as an opening end for inserting the secondary battery cell 1, while platelike joining walls 14 and 24 are disposed around the opening end. The joining walls 14 and 24 connect a plurality of divided holder tubes 11 and 21 at their end faces and also function, as shown in FIGs. 3 and 4, as joining surfaces for joining the first holder 10 and the second holder 20. In this example, the first holder 10 and the second holder 20 are joined by screwing using screws. Each of the joining walls 14 and 24 has screw holes in the gaps between the secondary battery cells 1 stacked in a matrix. In the example of FIG. 3, etc., screw holes are provided at five positions in a cross pattern. The positions and the number of the screw holes are not limited to this example, and can be appropriately adjusted according to the number and layout of the secondary battery cells 1 stored in the battery holder 2, the required strength, and the like. Further, the coupling structure of the first holder 10 and the second holder 20 is not limited to screwing, and may be configured using other structures such as snap-fit.

### (Protruding Portion 15)

At least one of the pair of holder lid units 12 and 22 includes the protruding portion 15. The protruding portion 15 is disposed in a part of the holder lid unit 12 or 22 so as to protrude toward an end face of the secondary battery cell 1 stored in the holder tube unit 3. The protruding portion 15 is also configured to be elastically deformable in the direction in which it protrudes toward the end face of the secondary battery cell 1. In the examples of FIGs. 5 and 6, the protruding portion 15 is provided on the holder lid unit 12 of the first holder 10, while no protruding portion is provided on the holder lid unit 22 of the second holder 20. However, the present invention is not limited to this configuration. The protruding portion may be provided only on the second holder, or may be provided on both the first holder and the second holder.

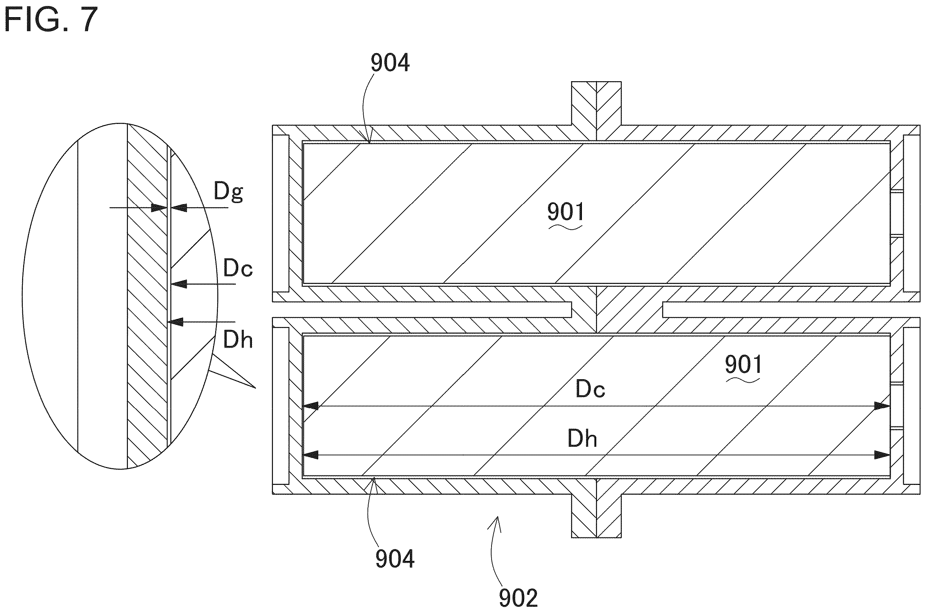

The cell storage space is designed to have a size capable of storing the secondary battery cell. In this regard, in consideration of the production tolerances of the secondary battery cell and the battery holder, a length Dh, which is the length of a cell storage space 904 in the longitudinal direction, is normally designed to be slightly greater than a length Dc, which is the length of the secondary battery cell 901, as in the battery holder 902 shown in the cross-sectional view of FIG. 7. As a result, a gap Dg may be formed between the inner face of the cell storage space 904 and the secondary battery cell 901, which may cause rattling or the like. Therefore, conventionally, for example, a structure in which an elastic body such as silicone rubber is interposed therein and fastened to fill the gap has been adopted. However, in this method, there has been a problem such that additional members such as elastic bodies are required, and the number of production processes increases due to, for example, positioning and fixing of these additional members.

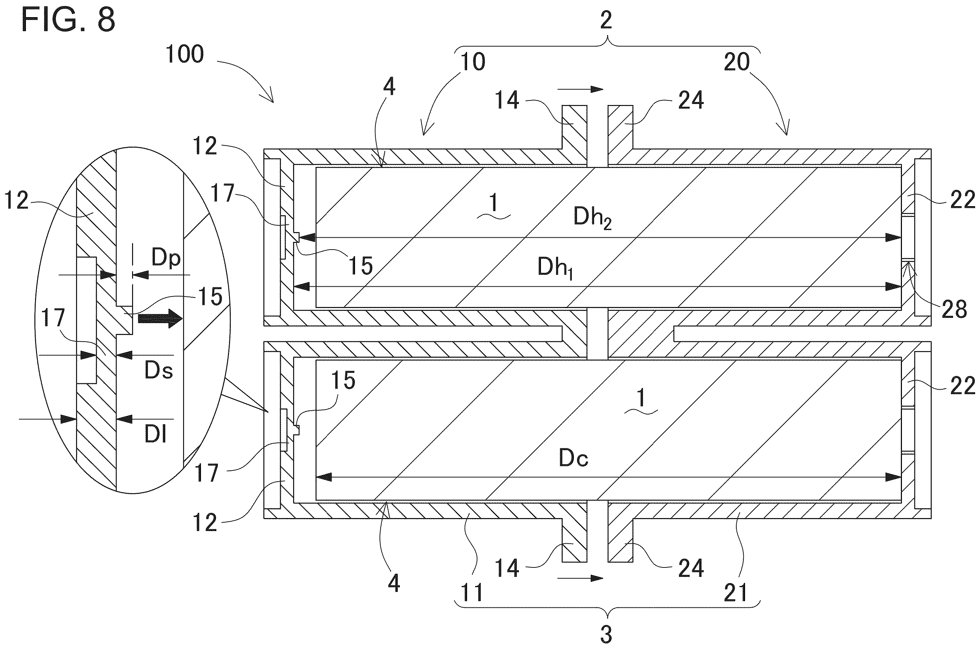

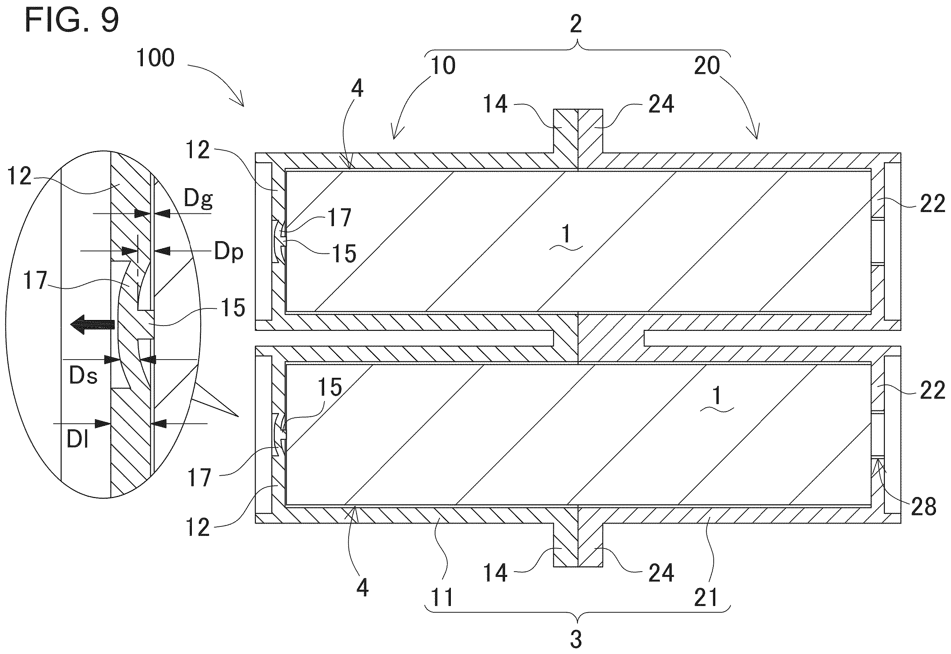

In contrast, in the battery pack 100 according to the present embodiment, the protruding portion 15 is disposed on the inner face of the cell storage space 4, and the protruding portion 15 has a mechanism for elastic deformation. This allows the protruding portion 15, which is protruded toward an end face of the secondary battery cell 1, to be brought into contact with the end face of the secondary battery cell 1. In this manner, the secondary battery cell 1 can be held while filling the gap. Specifically, as shown in the cross-sectional view of FIG. 5, the protruding portion 15 is disposed on the inner face of the holder lid unit 12 and this protruding portion 15 has a thickness Dp relative to a length Dh1, which is the length of the cell storage space 4 in the longitudinal direction, which is designed in consideration of production tolerances and the like. As a result, a length Dh2, which is the length of the cell storage space 4 at the position where the protruding portion 15 is disposed, can be made smaller than the length Dh1 of the cell storage space 4 where no protruding portion is disposed. The thickness Dp of the protruding portion 15 is greater than the difference between the maximum assumed value of production tolerance, which is, in this example, the maximum value of the length Dh1 of the cell storage space 4, and the minimum value of the length Dc of the secondary battery cell 1. As a result, as shown in FIG. 8, when the secondary battery cell 1 is inserted into the first holder 10 and the second holder 20, and the first holder 10 and the second holder 20 are coupled as shown in FIG. 9, even if the gap Dg is generated between the inner face of the cell storage space 4 and the secondary battery cell 1, the protruding portion 15 elastically deforms and presses the end face (the upper face in FIG. 9) of the secondary battery cell 1, thereby allowing the secondary battery cell 1 to be held in the cell storage space 4 without rattling.

The protruding portion 15 preferably presses the flat side among the end faces of the secondary battery cell 1. This is because the flat end face is more easily pressed. Since the end face on the negative electrode side of the secondary battery cell is usually flat, the protruding portion 15 is preferably disposed on the inner face of the holder lid unit facing the end face on the negative electrode side. In the examples of FIGs. 3, 6, etc., the protruding portion 15 is provided only on the holder lid unit 12 of the first holder 10, which faces the negative electrode side.

### (Elastic Structure)

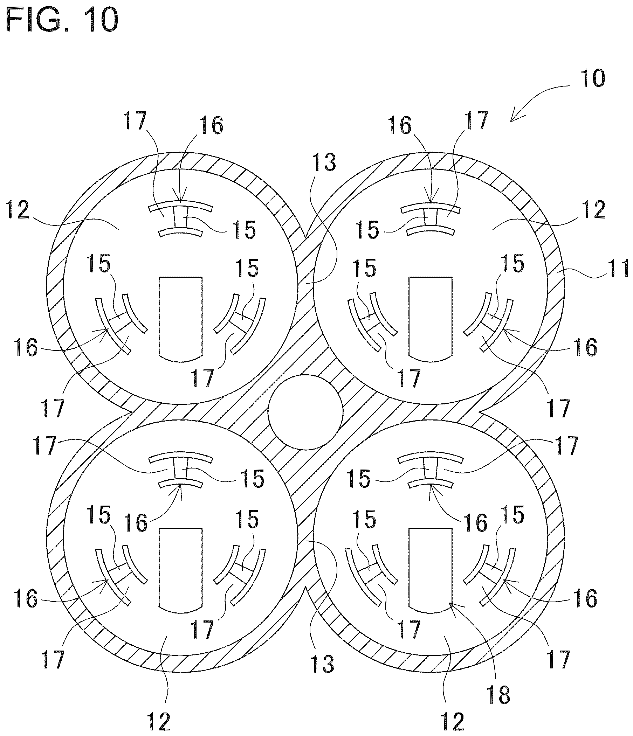

The protruding portion 15 also has an elastic structure to allow itself to be elastically deformed. By allowing the protruding portion 15 to elastically deform, it is possible to absorb the gap between the cell storage space 4 and the secondary battery cell 1 in the longitudinal direction. In this example, as shown in FIGs. 10 to 12, a pair of slits 16 are formed in the holder lid unit 12 of the first holder 10, and the protruding portion 15 is formed on a plate spring unit 17, which is sandwiched between the pair of slits 16, thereby imparting elasticity to the protruding portion 15. Specifically, by forming the protruding portion 15 on the plate spring unit 17, the plate spring unit 17 on which the protruding portion 15 is disposed is allowed to sink by the slits 16 on both sides of the plate spring unit 17, as shown in FIGs. 8 and 9. In this manner, by employing a simple structure in which the slits 16 are formed in the resin holder lid unit, elasticity can be imparted in the protruding direction of the protruding portion 15.

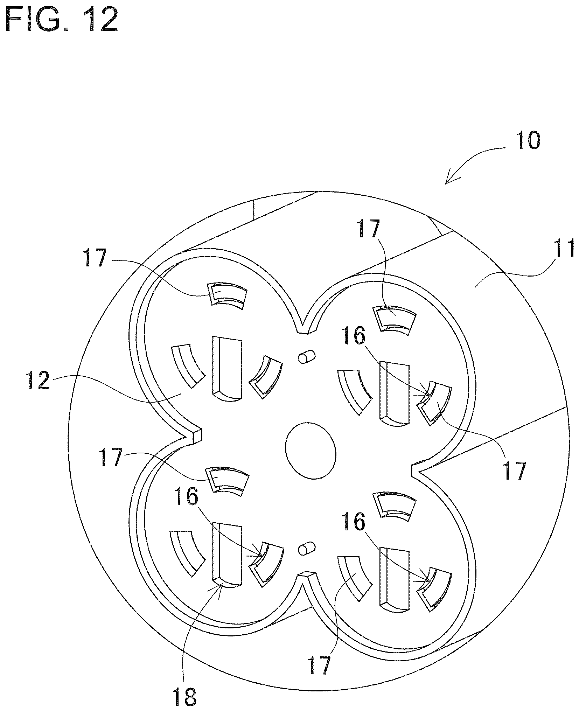

As shown in FIGs. 5, 12 etc., the plate spring unit 17 is preferably formed with a reduced thickness Ds, which is thinner than a thickness DI, which is the thickness of other regions of the holder lid unit 12. By thus making the holder lid unit 12 partially thin, the plate spring unit 17 can be made elastically deformable more easily. Preferably, as shown in the enlarged cross-sectional views of FIGs. 5 and 8, a level difference is provided from the outer face side of the holder lid unit 12 to form the thin plate spring unit 17. In contrast, the surface on the inner face side of the holder lid unit 12 in contact with the secondary battery cell 1 is kept flush. This makes it possible to form a thin portion while preventing a decrease in the protrusion amount Dp of the protruding portion 15.

The plate spring unit 17 and the protruding portion 15 described above can be formed integrally with the holder lid unit 12. This allows addition of the protruding portion 15 with an elastic structure at a low cost without preparing a separate member, thereby providing a function of stably holding the secondary battery cell 1 regardless of the gap between the secondary battery cell 1 and the cell storage space 4.

The protruding portion 15 is formed at the center of the longitudinal direction of the pair of slits 16. This can increase the amount of elastic deformation of the protruding portion 15 utilizing the slits 16. In addition, the tip end face of the protruding portion 15 is preferably flat. This makes it possible to increase the area of the end face of the secondary battery cell 1 to be pressed.

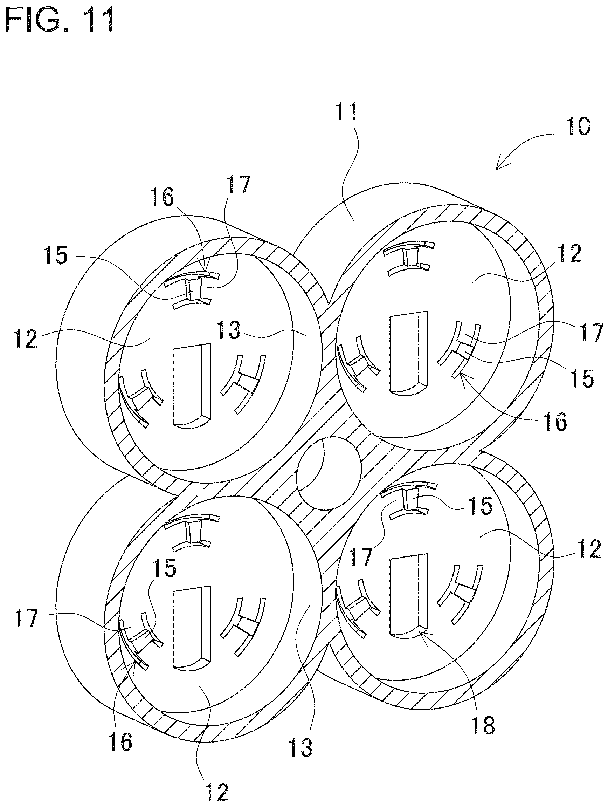

It is preferable to provide a plurality of the protruding portions 15. In the examples of FIGs. 10 and 11, three protruding portions 15 are provided at three positions along the circumferential direction of the circular holder lid unit 12. These protruding portions 15 are evenly disposed from the center of the circular shape of the holder lid unit 12 at an angular interval of 120°. In this manner, it is preferable to dispose a plurality of the protruding portions 15 in rotational symmetry with respect to the circular shape of the holder lid unit 12.

### [EMBODIMENTS 2 and 3]

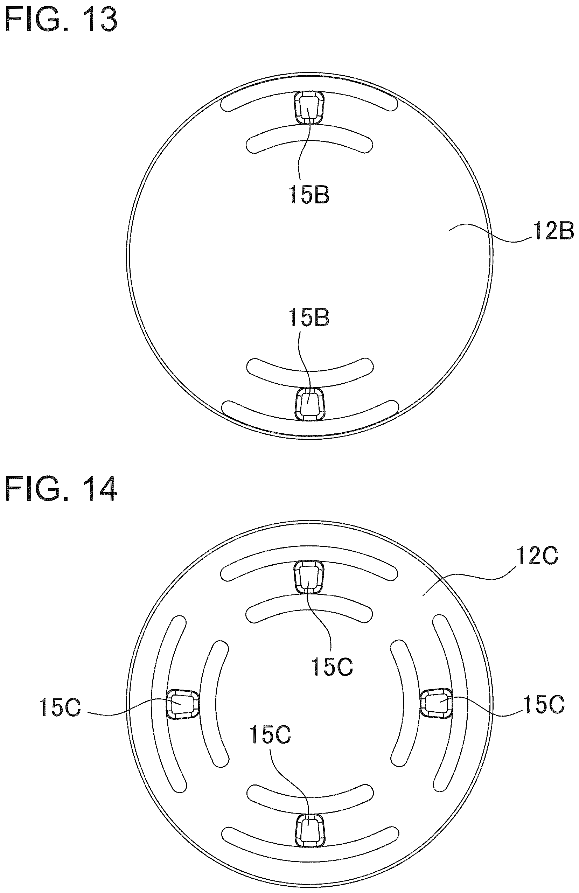

Alternatively, by disposing the protruding portions 15 at three different positions on a plane and pressing the end face of the secondary battery cell 1 by each of these protruding portions 15, it is possible to bring the protruding portions 15 into contact with the end face of the secondary battery cell 1 at respective positions, thereby allowing the secondary battery cell 1 to be stably pressed and held. However, the positions and number of the protruding portions are not limited to this configuration, and any number or arrangement may be used. For example, as in the inner face of a holder lid unit 12B of the battery pack according to Embodiment 2 shown in FIG. 13, two protruding portions 15B may be provided at two positions, or as in the inner face of a holder lid unit 12C of the battery pack according to Embodiment 3 shown in FIG. 14, four protruding portions 15C may be provided at four positions. When four or more protruding portions are provided, depending on the angle between the end face of the secondary battery cell and the inner face of the holder lid unit, there is a possibility that some of the protruding portions may not come into contact with the end face. Therefore, from the viewpoint of efficiently holding the secondary battery cell with a small number of the protruding portions, it is preferable to provide three or fewer protruding portions. When only one protruding portion is provided, the protruding portion is preferably disposed at the center of the circular shape of the holder lid unit. In the figures showing respective embodiments, the same members as those of the battery pack according to Embodiment 1 described above are given the same reference numbers and detailed descriptions are omitted as appropriate. In Embodiment 2 and subsequent embodiments, the window opened in the holder lid unit is not illustrated for the purpose of explanation.

### [EMBODIMENT 4]

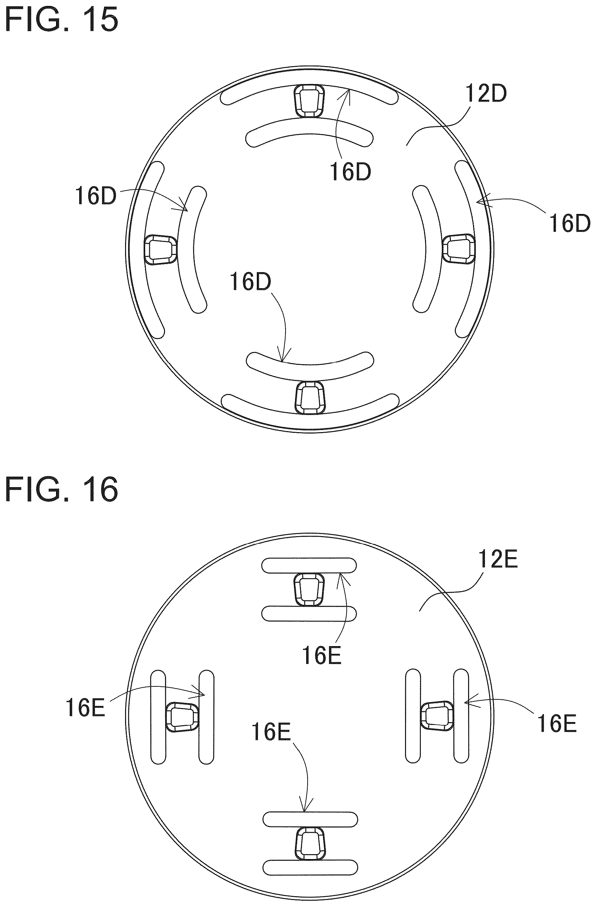

Furthermore, in the above examples, cases have been described in which arc-shaped slits are formed at positions spaced apart from the outer periphery of the holder lid unit; however, the arrangement of slits is not limited to such configurations. For example, as in the inner face of a holder lid unit 12D of the battery pack according to Embodiment 4 shown in FIG. 15, it is possible to form slits 16D along the outer periphery of the holder lid unit 12D.

### [EMBODIMENTS 5 and 6]

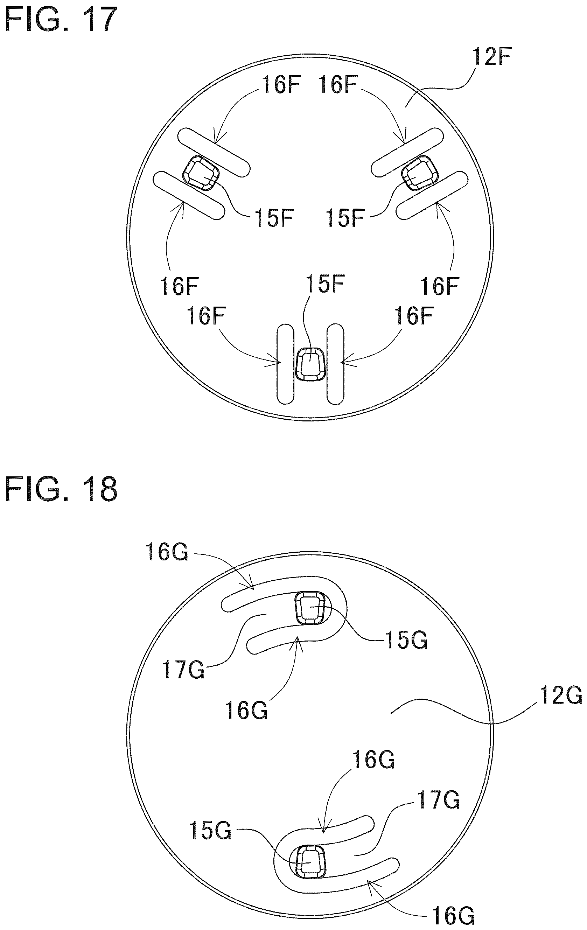

Alternatively, a linear shape may also be employed for the pattern of the slits 16 that form the elastic structure, in addition to the arc shape along the circular shape of the holder lid unit 12 as shown in FIGs. 10, 11, etc. For example, in the inner face of a holder lid unit 12E of the battery pack according to Embodiment 5 shown in FIG. 16, a pair of slits 16E are formed as parallel straight lines. The orientation of each slit is also not limited to an arc direction or tangential direction of circle. For example, in the inner face of a holder lid unit 12F of the battery pack according to Embodiment 6 shown in FIG. 17, a pair of slits 16F are formed by being extended in the radial direction of the circle. FIG. 17 shows an example in which three protruding portions 15F are formed. However, two protruding portions may also be provided in a straight line along the diameter of the circle. By thus forming the slits in a linear shape, the slits can be more advantageously formed in a simple manner. On the other hand, by forming the slits 16 along the arc direction as shown in FIG. 10, etc., the plate spring unit 17 can be formed while following the shape of the holder lid unit 12, thereby preventing the generation of a portion with stress concentration around the slits 16. As a result, the strength of the holder lid unit 12 is preferably maintained.

### [EMBODIMENTS 7 and 8]

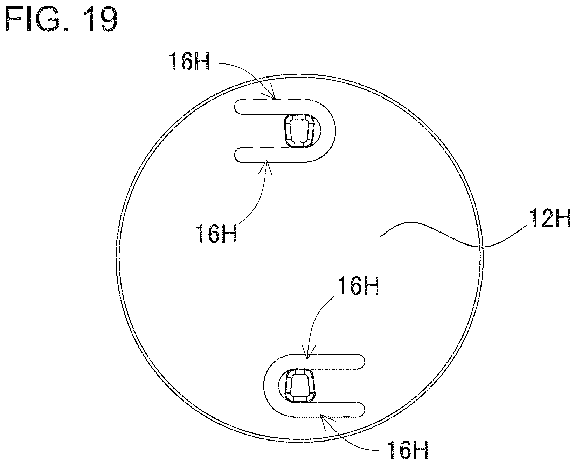

Alternatively, although the above examples describe the configuration in which the pair of slits 16 are formed and the plate spring unit 17 is formed between the slits 16, the elastic structure is not limited to this configuration. For example, as in the inner face of a holder lid unit 12G of the battery pack according to Embodiment 7 shown in FIG. 18, a cantilever spring unit 17G with U-shaped slits 16G may be formed. This configuration makes it possible to increase the amount of displacement of the protruding portion 15G by elastic deformation. On the other hand, since the pressing force of the protruding portion 15G decreases in this configuration, some measures may be adopted as necessary, such as increasing the thickness of the cantilever spring unit 17G. Further, also when forming the cantilever spring unit 17G, it is possible to form each slit 16G in an arc shape as shown in FIG. 18, or form each slit 16H in a linear shape as in the inner face of a holder lid unit 12H of the battery pack according to Embodiment 8 shown in FIG. 19.

### [EMBODIMENT 9]

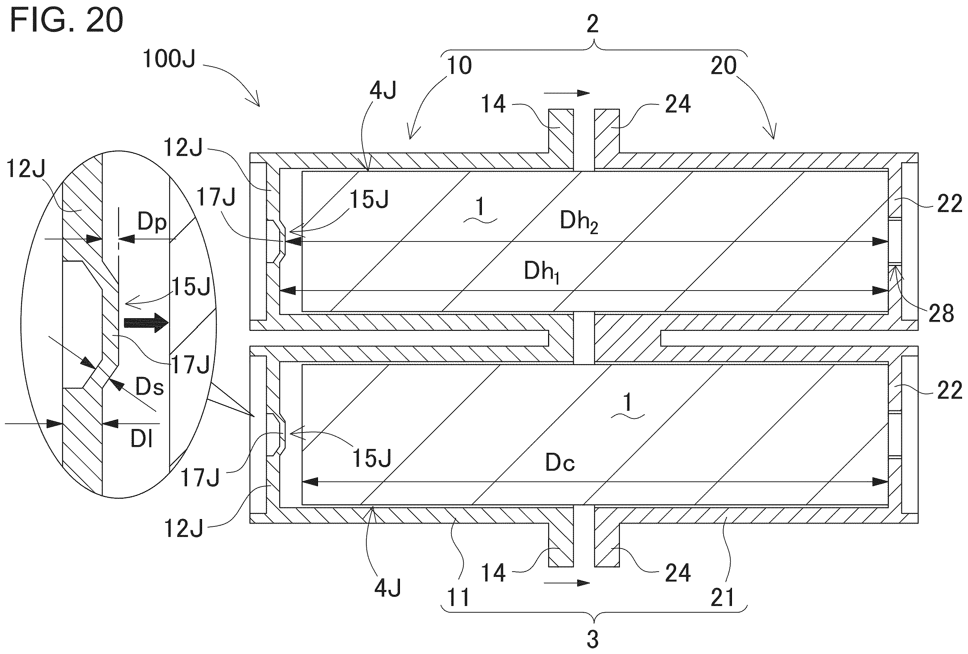

In the above examples, as shown in the enlarged cross-sectional view of FIG. 8 with an enlarged view of a main portion, the protruding portion 15 has been described as having a block-like shape protruding from the flat plane of the plate spring unit 17. However, the present disclosure is not limited to such a configuration in which the protruding portion is formed to protrude from the flat plane of the plate spring unit, instead, the plate spring unit itself may be formed to protrude, and such a structure is also referred to as a protruding portion. The cross-sectional view in FIG. 20 illustrates such an example as a battery pack 100J according to Embodiment 9. Again, in this figure, the same members as those of such as the battery pack according to Embodiment 1 described above are given the same reference numbers and detailed descriptions are omitted. In the battery pack 100J shown in this figure, a trapezoidal-shaped plate spring unit 17J is formed to protrude from the inner face of a holder lid unit 12J to form a protruding portion 15J. The plate spring unit 17J that trapezoidally protrudes comes into contact with an end face of the secondary battery cell 1 stored in a cell storage space 4J to be elastically deformed, and holds the secondary battery cell 1 while pressing the secondary battery cell 1. By thus forming the protruding portion 15J in a trapezoidal shape, the end face of the secondary battery cell 1 can be pressed over a wider area. Therefore, the secondary battery cell 1 can be more stably held. This configuration, in which the plate spring unit 17J itself is deformed to serve as the protruding portion 15J, can be easily formed by integral molding with the holder lid unit 12J.

### [EMBODIMENT 10]

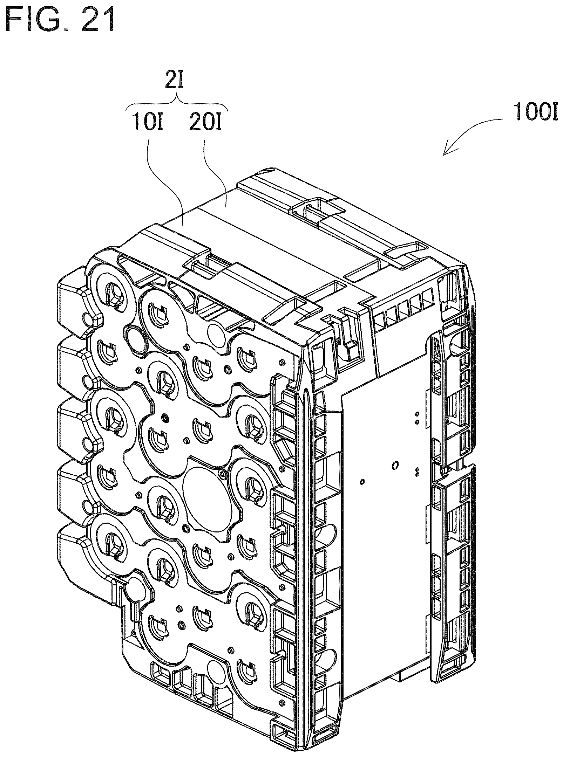

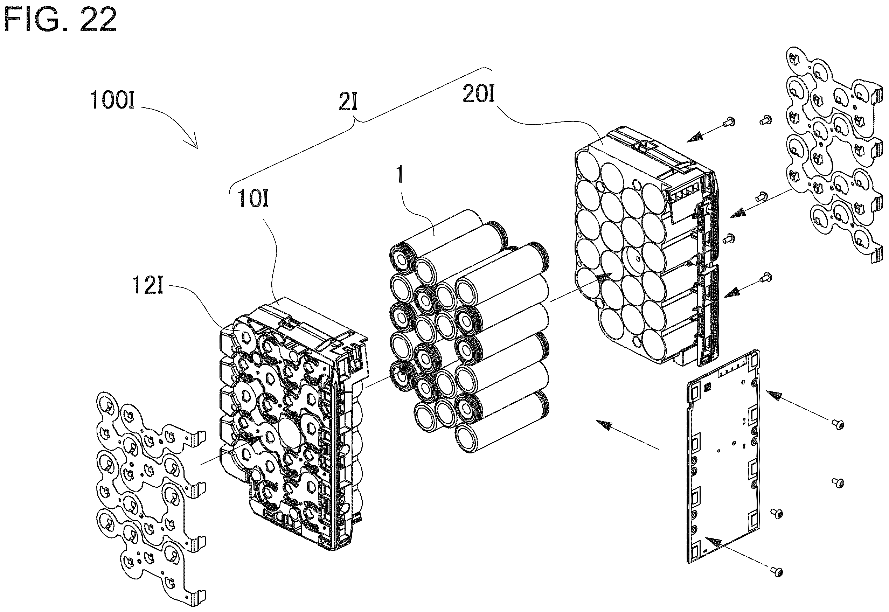

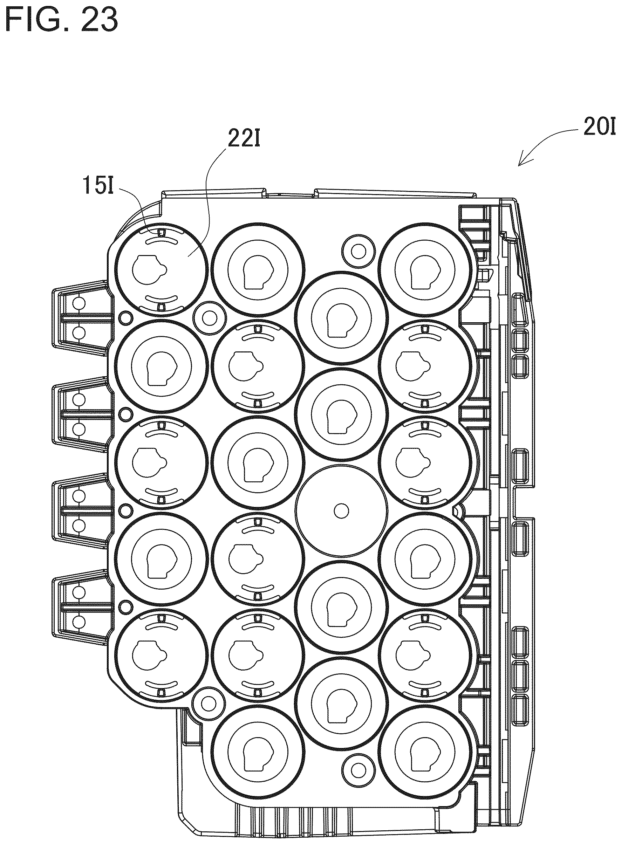

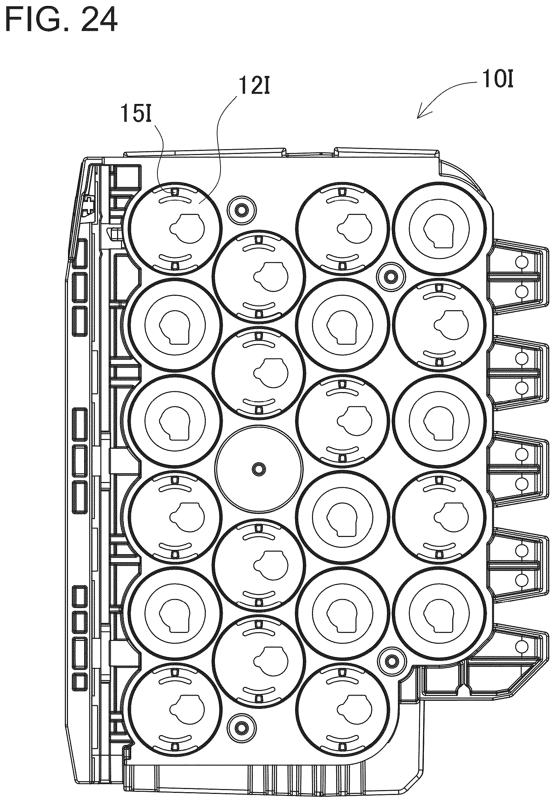

Furthermore, in the above examples, cases have been described in which all the secondary battery cells 1 stored in the cell storage space 4 of the battery holder 2 are held in a state where the same electrodes are flush with each other. In this configuration, it is sufficient to provide the protruding portion 15 only on one of the divided holders constituting the battery holder 2. For example, in the example of FIG. 10, etc., the protruding portion 15 is required only on the first holder 10. On the other hand, there are cases in which a plurality of secondary battery cells are stored in the battery holder in a state such that the secondary battery cells are stacked with their positive and negative electrodes facing in different directions. In such cases, it is desirable to provide the protruding portions on both the first holder and the second holder. For example, in a battery pack 100I according to Embodiment 10 shown in the perspective view of FIG. 21 and the exploded perspective view of FIG. 22, a plurality of the secondary battery cells 1 are caught between a first holder 10I and a second holder 20I in a state such that the secondary battery cells are stacked with their positive and negative electrodes facing in different directions. In such a battery pack, as shown in FIG. 23, which is a front view of the second holder 20I of FIG. 22, and in FIG. 24, which is a front view of the first holder 10I of FIG. 22 viewed from the back, in the respective cell storage spaces corresponding to the first holder 10I and the second holder 20I, a protruding portion 15I is provided on the inner face of either a holder lid unit 121 or 22I of one of the divided holders, while no protrusion is provided on the holder lid unit 12I or 221 of the other divided holder. By thus forming the protrusion on either one of the holder lid unit 12I or the holder lid unit 22I that constitutes each cell storage space corresponding to each divided holder, even in a battery holder 2I in which the secondary battery cells 1 are stacked in different directions, it is possible to fill the gap between the cell storage space and the secondary battery cells 1 in the longitudinal direction, thereby preventing generation of rattling.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a casing of an electrical device. In this disclosure, a battery pack simply refers to those in which, at least, secondary battery cells are stored in a case. Therefore, a configuration with built-in secondary battery cells for driving an electrical device stored in a casing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present invention can be suitably used for a power source for driving an assist bicycle, or a power source for driving self-propelled robots for home delivery, electric carts for home delivery and golf courses, electric scooters, construction machinery, as well as vehicles such as hybrid vehicles and electric vehicles. In addition, the battery pack according to the present invention can also be appropriately used as a power source for portable electrical devices such as radios, electric cleaners, and power tools, as well as stationary energy storage applications such as a backup power source for servers or a power supply for households, business establishments, and factories.

### REFERENCE SIGNS LIST

- 100, 100I, 100J: battery pack
- 1: secondary battery cell
- 2: battery holder
- 3: holder tube unit
- 4, 4J: cell storage space
- 10, 10I: first holder
- 11: divided holder tube
- 12, 12B, 12C, 12D, 12E, 12F, 12G, 12H, 12I, 12J: holder lid unit
- 13: partition wall
- 14: joining wall
- 15, 15F, 15G, 15I, 15J: protruding portion
- 16, 16D, 16E, 16F, 16G, 16H: slit
- 17, 17J: plate spring unit; 17G ... cantilever spring unit
- 18: window
- 20, 20I: second holder
- 21: divided holder tube
- 22: holder lid unit
- 23: partition wall
- 24: joining wall
- 28: window
- 30: lead plate
- 901: secondary battery cell
- 902: battery holder
- 904: cell storage space
- Dh, Dh1: length of cell storage space
- Dh2: length of cell storage space at position where protruding portion is disposed
- Dc: length of secondary battery cell
- Dg: gap between inner face of cell storage space and secondary battery cell
- Dl: thickness of holder lid unit
- Ds: thickness of plate spring unit
- Dp: thickness of protruding portion

## Claims

1. A battery pack comprising:
one or more secondary battery cells, each of which extends in one direction and has a pair of end faces intersecting the extending direction, and
a battery holder that holds the one or more secondary battery cells,
wherein the battery holder comprises:
a hollow holder tube unit that individually stores the one or more secondary battery cells; and
a pair of holder lid units that respectively close hollow end faces of the holder tube unit,
wherein at least one of the pair of holder lid units includes an elastically deformable protruding portion that partially protrudes toward one of the pair of end faces of the secondary battery cells stored in the holder tube unit,
the battery holder is configured by joining a first holder and a second holder that are divided into at least two portions in a longitudinal direction of the one or more secondary battery cells, and
the protruding portion is configured to press the end face of the one or more secondary battery cells in a state where the first holder and the second holder are coupled.

2. The battery pack as recited in claim 1, wherein
the battery holder has a length along the longitudinal direction of each of the secondary battery cells in a cell storage space formed of the holder tube unit that individually stores the one or more secondary battery cells and the pair of holder lid units,
an interval between the pair of holder lid units is longer than the length of each of the one or more secondary battery cells, and
a length defined by a tip end of the protruding portion is shorter than the length of each of the one or more secondary battery cells.

3. The battery pack as recited in claim 1, wherein the protruding portion is integrally formed with one of the pair of holder lid units.

4. The battery pack as recited in claim 3, wherein
a pair of slits is formed in one of the pair of holder lid units, and
the protruding portion is formed between the pair of slits.

5. The battery pack as recited in claim 4, wherein the protruding portion is formed at a center of a longitudinal direction of the pair of slits.

6. The battery pack as recited in claim 4, wherein a plate spring unit that is sandwiched between the pair of slits has a thickness thinner than a thickness of the holder lid units.

7. The battery pack as recited in claim 4, wherein each of the one or more secondary battery cells is formed into a cylindrical shape.

8. The battery pack as recited in claim 7, wherein a plurality of the protruding portions are disposed in one of the pair of holder lid units.

9. The battery pack as recited in claim 8, wherein the plurality of the protruding portions are disposed in rotational symmetry in a circular shape of an end face of the cylindrical secondary battery cell.

10. The battery pack as recited in claim 8, wherein the pair of slits are formed into an arc shape along a circumferential direction of the end face of the cylindrical secondary battery cell.

11. The battery pack as recited in any one of claims 1 to 10, wherein the protruding portion is configured to press each end face on a negative electrode side of the one or more secondary battery cells.
